# EUROPÄISCHE PATENTSCHRIFT

(11) **EP 0 433 535 B1**
(45) Veröffentlichungstag und Bekanntmachung des Hinweises auf die Patenterteilung: **13.07.1994**
(21) Anmeldenummer: 90108136.4
(22) Anmeldetag: 27.04.1990
(51) Int. Cl.: B23Q 17/09, G01L 5/16

(54) **Mehrkomponenten-Kraftmessanordnung ohne Messplatte**
Multicomponent-force sensing device without measuring plate
Capteur de force à plusieurs constituants sans plaque de mesurage

(30) Priorität: 22.12.1989 CH 4569/89
(43) Veröffentlichungstag der Anmeldung: 26.06.1991
(73) Patentinhaber: Kistler Instrumente AG, CH-8408 Winterthur (CH)
(72) Erfinder: Wolfer, Peter, CH-8450 Kleinandelfingen (CH); Schaffner, Georges, CH-8330 Pfäffikon (CH)
(74) Vertreter: Schmidt, Horst, Dr.

(56) Entgegenhaltungen:
- EP-A- 0 203 490
- EP-A- 0 321 599
- DE-A- 2 736 373
- DE-A- 3 019 751
- DE-A- 3 407 619
- DE-U- 8 911 628
- US-A- 4 875 365

## Beschreibung

Die Erfindung betrifft eine Mehrkomponenten-Kraftmessanordnung gemäss dem Oberbegriff des Patentanspruches 1, wie sie z.B. aus der EP-A-0 203 490 bekannt ist.

Die Erfindung eignet sich insbesondere zur automatischen Messung von Kräften in Werkzeugmaschinen und ermöglicht deren Überwachung und die Erkennung von Werkzeugverschleiss oder Werkzeugbruch. Die Messung des Zustandes von Werkzeugen ist eine wesentliche Voraussetzung für die Automatisierung eines Fertigungssystems. Die Verwendung von Messplattformen, die mit mehreren Kraftaufnehmern bestückt sind und zwischen den Maschinenteilen eingefügt werden, ist aus den deutschen Patentschriften 19 52 522 und 34 40 670 bekannt. Bekannt ist auch beispielsweise aus der Schweizer Patentschrifte 476 990 und der DE-A-27 36 373, dass der Kraftfluss unterteilt werden kann, wobei ein Teil die zwischen den Kraftaufnehmern liegenden Bereiche der Messplattform durchdringt und die Kraftaufnehmer lediglich einen Bruchteil der gesamten Kraft aufnehmen. Dadurch kann der Messbereich erweitert werden (Messung im Nebenschluss). Beschrieben wird ferner in der DE-U- 89 11 628 eine Messplatte, die in der bevorzugten Ausführungsform nur einen Mehrkomponenten-Kraftaufnehmer besitzt. Auch der Einbau von Kraftaufnehmern in Maschinenteilen ohne Verwendung von Messplattformen oder Messplatten wurde bereits beschrieben, beispielsweise in der DE-A-34 07 619 oder DE-A-34 07 620. Die in diesen beiden letzt genannten Schriften erwähnten Kraftaufnehmer sind nur in einer Richtung kraftempfindlich. Ein Nachteil der Anwendung von Messplattformen besteht darin, dass aufwendige Systeme mit mehreren Kraftaufnehmern, deren Anordnung bereits vorgegeben ist, als Ganzes zwischen zwei Maschinenteilen eingebaut werden müssen. Der Einbau von Einkomponenten-Kraftaufnehmern in ein Maschinenteil oder zwischen zwei Maschinenteilen wiederum reduziert die Messmöglichkeiten, die mit Mehrkomponenten-Kraftaufnehmern möglich sind, oder erfordert den Einsatz einer grösseren Anzahl von Kraftaufnehmern. Bekannt ist ferner aus der EP-A-0 203 490 ein mit einem Kraftaufnehmer versehener Werkzeughalter oder Drehstahleiner Drehmaschine, wobei der Kraftaufnehmer ein durchbohrtes Piezoelement umfasst, welches mittels einer den Hartmetalleinsatz gegenüber der Drehstahlbasis verspannenden Schraube unter Vorspannung gehalten ist, um die beim Drehen auftretenden Zerspanungskräfte messen zu können. Die durch das Piezoelement geführte Schraube ist nachteilig, da hierdurch die Messempfindlichkeit herabgesetzt wird. Darüber hinaus ist die bekannte Messanordnung speziell auf die Messung der Zerspanungskräfte unmittelbar am Werkzeug ausgelegt. Eine universelle Anwendung des bekannten Messprinzipes auf andere Maschinenteile als Drehwerkzeuge scheidet daher aus.

Aufgabe der Erfindung ist es demgegenüber, die mit bekannten Messanordnungen verbundenen Nachteile zu beseitigen, insbesondere eine Mehrkomponenten-Kraftmessanordnung zu schaffen, die die Erfassung der Kräfte an beliebigen Bereichen eines Maschinenteiles erlaubt. Diese Aufgabe wird erfindungsgemäss dadurch gelöst, dass wenigstens eine Aussparung in einem Maschinenteil vorgesehen ist, in der der Kraftaufnehmer und eine im Kraftfluss zwischen dem Kraftaufnehmer und dem Maschinenteil angeordnete Einrichtung zum Einstellen und Aufbringen einer Vorspannkraft unabhängig vom Spannungszustand des Maschinenteiles aufgenommen sind. Ein Mehrkomponenten-Kraftaufnehmer kann somit in einer taschenförmigen Aussparung in einem Maschinenteil kraftschlüssig untergebracht werden, wobei es die Erfindung ermöglicht, den Ort der Aussparung so zu wählen, dass die auftretenden mechanischen Spannungen und die Spannungsänderung empfindlich auf die Kräfte reagieren, die beispielsweise bei einem Zerspanungsvorgang auf das Werkzeug ausgeübt werden. Eine weitere typische Ausführungsform besteht darin, dass in einer nutenförmigen Ausfräsung in einem einzigen Maschinenteil (ohne Teilung) ein oder mehrere Mehrkomponenten-Kraftaufnehmer kraftschlüssig aufgenommen sind. In einer dritten Ausführungsform werden die Mehrkomponenten-Kraftaufnehmer in Ausfräsungen zwischen zwei getrennten Maschinenteilen untergebracht. Die Erfassung mehrerer Kraftkomponenten erlaubt eine eingehendere Analyse der Vorgänge am Werkzeug und damit eine bessere Ueberwachung von dessen Zustand, als es die Erfassung nur einer Kraftkomponente ermöglichen würde. Es ist auch möglich, in weiteren Aussparungen, auch in anderen Maschinenteilen, weitere Kraftanteile zu erfassen und dadurch die Analyse beispielsweise der Zerspanungsvorgänge noch besser zu optimieren. Diese Möglichkeit ist bei einer zum voraus fixierten Anordnung der Kraftaufnehmer in einer Messplattform nicht gegeben. Die Aussparungen können durch den Kunden und Anwender selber hergestellt werden.

Ausführungsbeispiele der Erfindung werden im folgenden anhand der Zeichnung näher beschrieben. Es zeigen:
- Fig. 1: einen Mehrkomponenten-Kraftaufnehmer in einer taschenförmigen Aussparung des Maschinenschlittens.
- Fig. 2: einen Mehrkomponenten-Kraftaufnehmer in einer Ausfräsung in einer Nut zwischen zwei Maschinenteilen.
- Fig. 3a: einen Mehrkomponenten-Kraftaufnehmer in einer Nut zwischen zwei Maschinenteilen, unterlagert von einem Abstimmkörper.
- Fig. 3b: einen Mehrkomponenten-Kraftaufnehmer in einer Nut zwischen zwei Maschinenteilen, überlagert von einem Abstimmkörper.
- Fig. 4: merhrere Mehrkomponenten-Kraftaufnehmer in Ausfräsungen in einer Nut zwischen zwei Maschinenteilen.
- Fig. 5: Mehrkomponenten-Kraftaufnehmer in taschenförmigen Aussparungen seitlich am Maschinenschlitten eines Drehautomaten.
- Fig. 6: Mehrkomponenten-Kraftaufnehmer in taschenförmigen Aussparungen seitlich an einer Ausfräsung längs der Mittelachse des Maschinenschlittens eines Drehautomaten.
- Fig. 7: einen Mehrkomponenten-Kraftaufnehmer in einer längsseitigen Ausfräsung parallel zur Mittelachse eines Maschinenschlittens.
- Fig. 8a: eine Einfräsung in ein Maschinenteil, in welche ein keilförmiger Mehrkomponenten-Kraftaufnehmer und ein Anpresskeil eingeschoben sind.
- Fig. 8b: einen Schnitt A-A' durch den in Fig. 8a dargestellten Doppelkeil.
- Fig. 9a: eine Einfräsung in ein Maschinenteil, in welche ein Mess- und ein Anpresskeil eingeschoben ist.
- Fig. 9b: einen Schnitt A-A' durch den in Fig. 9a dargestellten Doppelkeil.
- Fig. 10: ein Doppelkeil-Spannelement in einer Aussparung.
- Fig. 11: einen Schnitt A-A' durch das in Fig. 10 dargestellte Doppelkeil-Spannelement.

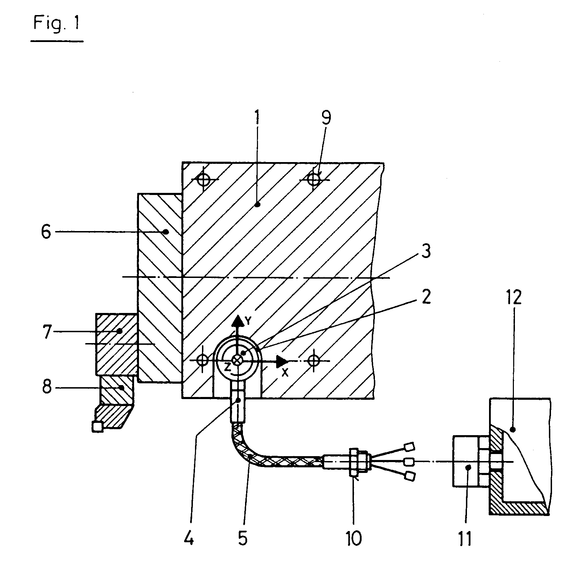

Fig. 1 zeigt einen Mehrkomponenten-Kraftaufnehmer in einer taschenförmigen Aussparung des Maschinenschlittens eines Drehautomaten. 1 stellt den Maschinenschlitten (Horizontalschnitt knapp oberhalb des Kraftaufnehmers) dar, in den eine taschenförmige Aussparung 2 eingefräst ist. In dieser liegt kraftschlüssig ein Mehrkomponenten-Kraftaufnehmer 3 (Empfindlichkeitsrichtungen x,y,z) mit auswärts gerichtetem Kabelanschlussstecker 4. Das Anschlusskabel 5 enthält die drei Signalleitungen x,y,z. Der Kabelanschluss 4 ist in einer bevorzugten Ausführungsform verschweisst, wodurch das Anschlusskabel 5 in den Aufnehmer 3 'integriert' ist. Diese feste Verbindung zwischen Kabelanschlussstecker 4 und Aufnehmer 3 sowie die Verpackung der Signalleitungen x, y, z im Anschlusskabel 5 dichten die Signalleitungen gegen das Eindringen schädlicher Einflüsse von aussen, wie Feuchtigkeit, absolut ab. Am anderen Ende des Anschlusskabels 5 befindet sich ein Kabelabschlussstecker 10, der sich mit der Steckerbüchse 11 im Kabelanschlussbereich 12 für Dreikanalladungsverstärker, Steckerbox oder Parallelschaltbox oder, allgemein, mit einer Signalverarbeitungsanlage, fest verschrauben lässt. Diese feste Verschraubung des Anschlusskabels 5 auf der Verstärkerseite, die Verschweissung auf der Aufnehmerseite sowie die Qualität des Kabels selber schützen die ganze Messstrecke 4, 5, 10, 11, 12 vor dem Zutritt schädlicher Maschinenöle und sonstiger Feuchtigkeit.

Ein weiterer Vorzug der genannten Messstrecke 4,5,10 (d.h. bis zur Steckbuchse 11) samt dem angeschweissten Kraftaufnehmer 3 besteht darin, dass sie auf sehr einfache Weise in die Aussparung 2 in der Messplatte 1 eingeschoben werden kann. Demgegenüber ist die Verkabelung einer eingangs erwähnten Messplattform mit mehreren Kraftaufnehmern viel komplizierter und aufwendiger.

In Fig. 1 eingezeichnet ist ebenfalls das auf diesem Messystem bevorzugt angewendete Koordinationssystem x, y, z.

In der x-Richtung wirkt, im Falle eines Drehautomaten, die Vorschubkraft, in der y-Richtung die Passivkraft und in der z-Richtung die Hauptschnittkraft. Diese drei für die Operation des Drehens relevanten Kraftkomponenten werden durch die einzige Kraftmesszelle 3 erfasst, welche dadurch das eingangs erwähnte System mit beispielsweise vier in einem Rechteck angeordneten Kraftaufnehmern ersetzt.

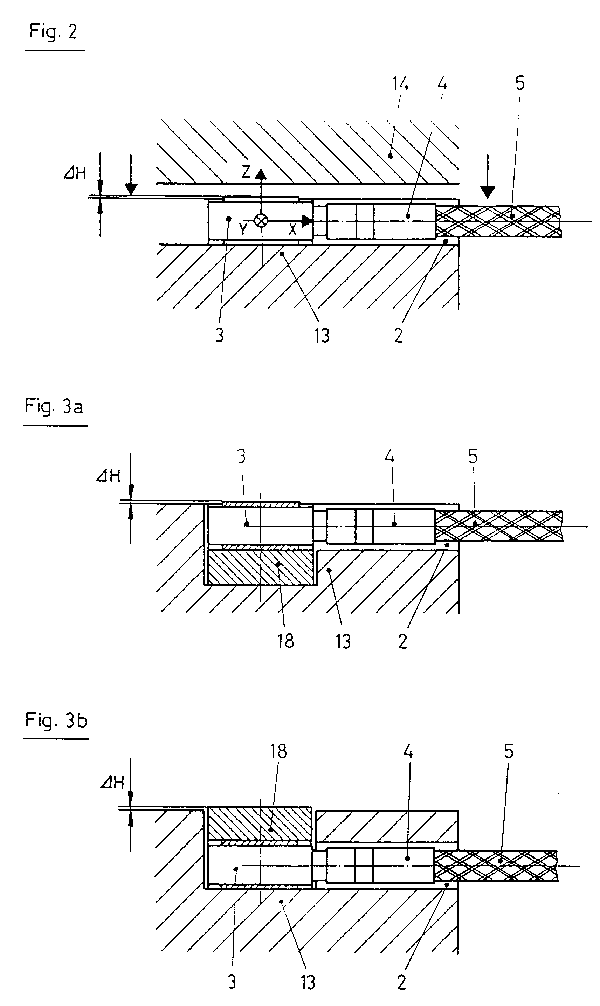

Fig. 2 zeigt einen Mehrkomponenten-Kraftaufnehmer in einer Ausfräsung in einer Nut zwischen zwei Maschinenteilen. Die schon verwendeten Zeichen bedeuten dasselbe wie in Fig. 1. Der Mehrkomponenten-Kraftaufnehmer 3 liegt auf der planen Seite der Ausfräsung 2 im Maschinenteil 13 und stösst seitlich an die Begrenzungswand dieser Ausfräsung. Die zentrale Partie des Aufnehmers 3 überragt um einen gewissen Betrag H die obere Grenzfläche des Maschinenteils 13. Bei Anpressen des Maschinenteils 14 wird dem Kraftaufnehmer 3 die notwendige Vorspannung eingeprägt. Wenn die obere Begrenzungsfläche des Kraftaufnehmers 3 mit der oberen Begrenzung des Maschinenteils 13 in einer Ebene liegt, wird der Kraftfluss teilweise durch den Maschinenteil 13 und teilweise durch den Kraftaufnehmer 3 fliessen (Nebenschluss). Die Vorteile dieses Messverfahrens wurden eingangs erwähnt.

Eine präzise Methode für die Einstellung des Nebenschlussgrades wird in den Figuren 3a und 3b gezeigt. Die Abstimmung geschieht in beiden Ausführungsformen mit einem zum Kraftaufnehmer 3 passenden zylindrischen Abstimmkörper 18, welcher in Fig. 3a unterhalb des Kraftaufnehmers 3, in Fig. 3b oberhalb desselben angebracht ist. Die obere Begrenzungsebene des Kraftaufnehmers 3 (Fig. 3a) oder die obere Begrenzungsebene des Abstimmkörpers 18 (fig. 3b) überragt die Begrenzungsebene des Maschinenteils 13 um einen Betrag H, der z.B. durch Läppen des Abstimmkörpers 18 sehr genau eingestellt werden kann. Dadurch ist auch eine sehr genaue Einstellung des Nebenschlussgrades möglich.

Anstatt eines einzigen Mehrkomponenten-Kraftaufnehmers können in einer Nut zwischen zwei Maschinenteilen 13 und 14 natürlich auch mehrere Mehrkomponenten-Kraftaufnehmer in entsprechenden Ausfräsungen untergebracht sein.

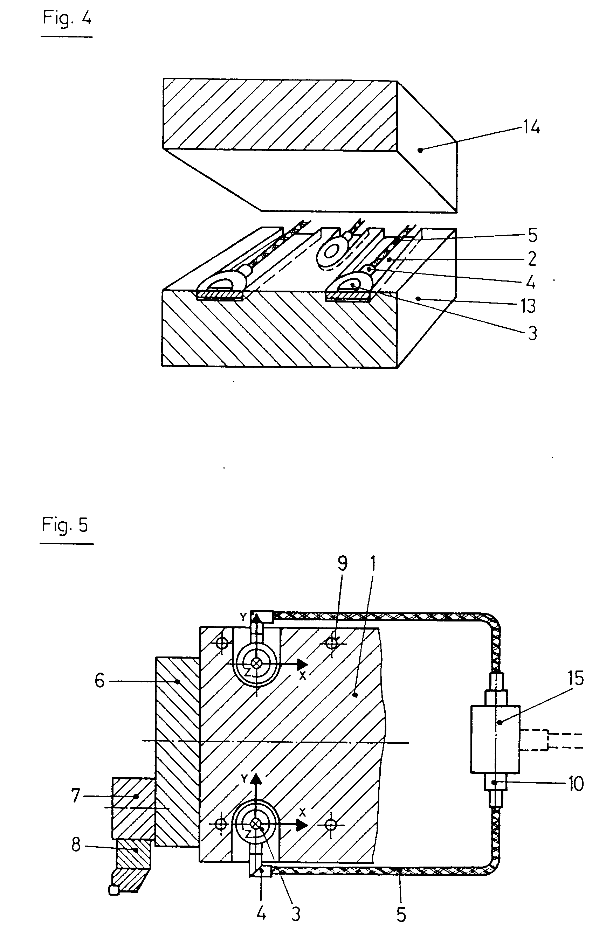

Dies wird dargestellt in Fig. 4. Sie ist nichts anderes als eine perspektivische Darstellung von drei Mehrkomponenten-Kraftaufnehmern, die mit Kabelanschlusssteckern 4 und Anschlusskabeln 5 versehen und in Ausfräsungen 2 des Masschinenteiles 13 eingelegt sind. Der zentrale Bereich der Aufnehmer 3 ist leicht überhöht, wodurch bei Anpressen des Maschinenteiles 14 in bereits dargelegter Weise Kraftnebenschlüsse entstehen und die Kraftaufnehmer 3 mechanisch vorgespannt werden.

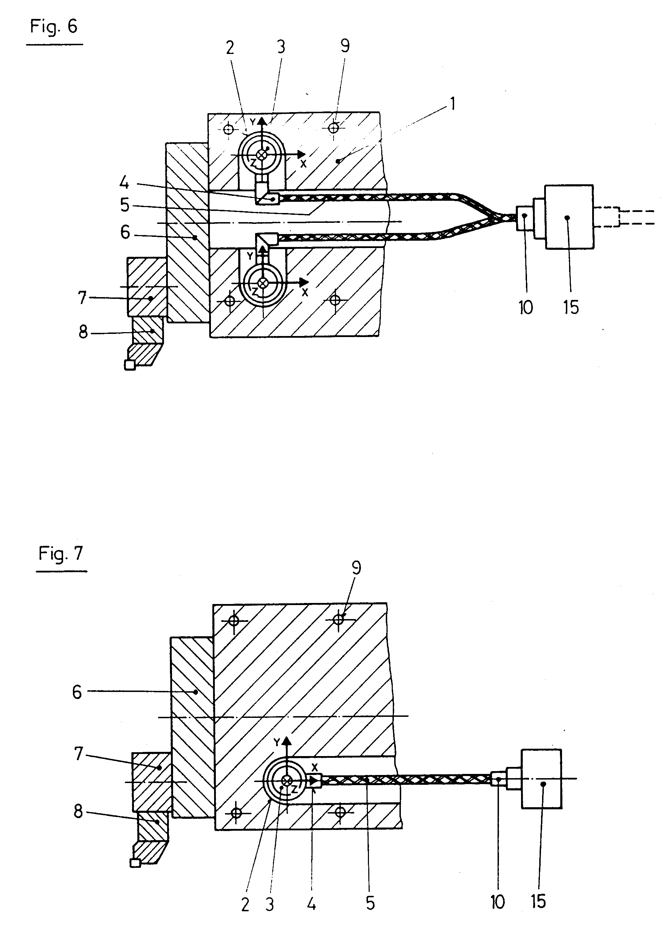

Die Figuren 5, 6 und 7 zeigen vorteilhafte Ausführungsformen der Erfindung im Zusammenhang mit einem Drehautomaten. Bei Fig. 5 sind zwei Mehrkomponenten-Kraftaufnehmer 3 seitlich aussen am Maschinenschlitten angebracht und demzufolge leicht zugänglich, bei Fig. 6 sind sie seitlich an einer Ausfräsung 16 längs der Mittelachse des Maschinenschlittens 1 angebracht und dadurch geschützter. In beiden Fällen sind die Anschlusskabel 5 über einen rechtwinkligen Kabelanschlussstecker 4 mit den Kraftaufnehmern 3 verbunden, wodurch die Kabel 5 leichter parallel zu den Begrenzungswänden gelegt werden können. In beiden Fällen führen die Anschlusskabel 5 über einen Kabelanschlussstecker 10 in eine Signalverarbeitungsanlage 15, die im einfachsten Falle alle x, y und z-Signale parallelisiert und damit addiert und verstärkt. Natürlich ist es auch möglich, in der Signalverarbeitungsanlage 15 mit den Signalen andere Funktionen zu bilden, beispielsweise Differenzen, und dadurch nicht nur Kräfte, sondern auch Drehmomente zu messen. Fig. 7 zeigt einen Mehrkomponenten-Kraftaufnehmer in einer längsseitigen Ausfräsung parallel zur Mittelachse eines Maschinenschlittens. Durch das Verlegen des Anschlusskabels 5 in eine Ausfräsung ist dieses besser geschützt als bei der Ausführungsform gemäss Fig. 1, bei der das Kabel 5 ausserhalb des Maschinenschlittens 1 verläuft. Bei der Ausführungsform nach Fig. 7 ist das Kabel 5 über einen gestreckten Kabelanschlussstecker 4 mit dem Mehrkomponenten-Kraftaufnehmer 3 verbunden.

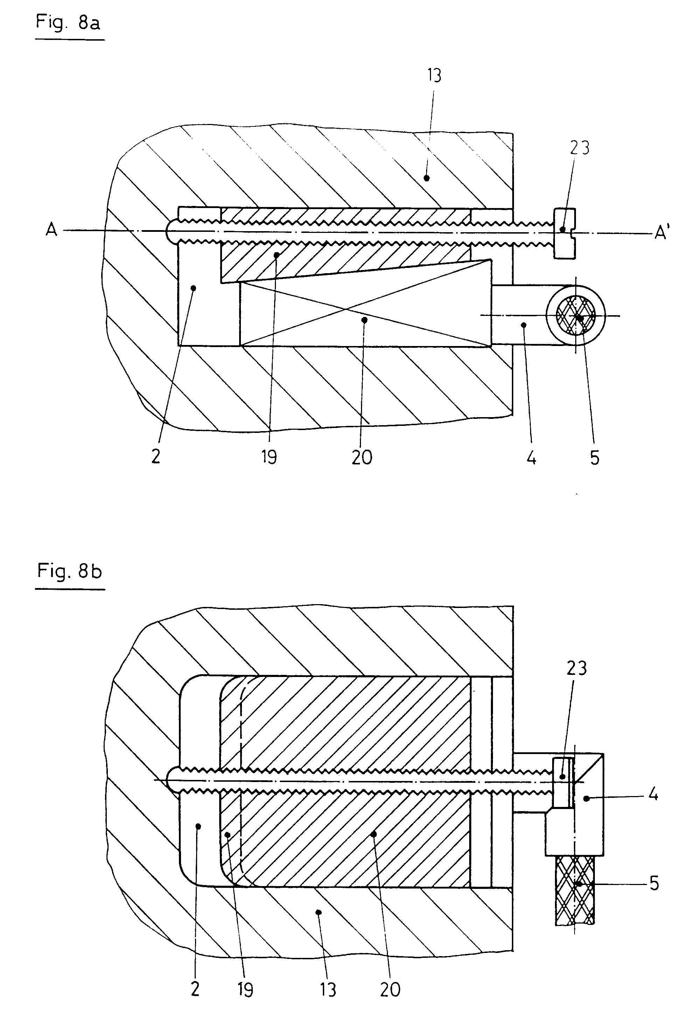

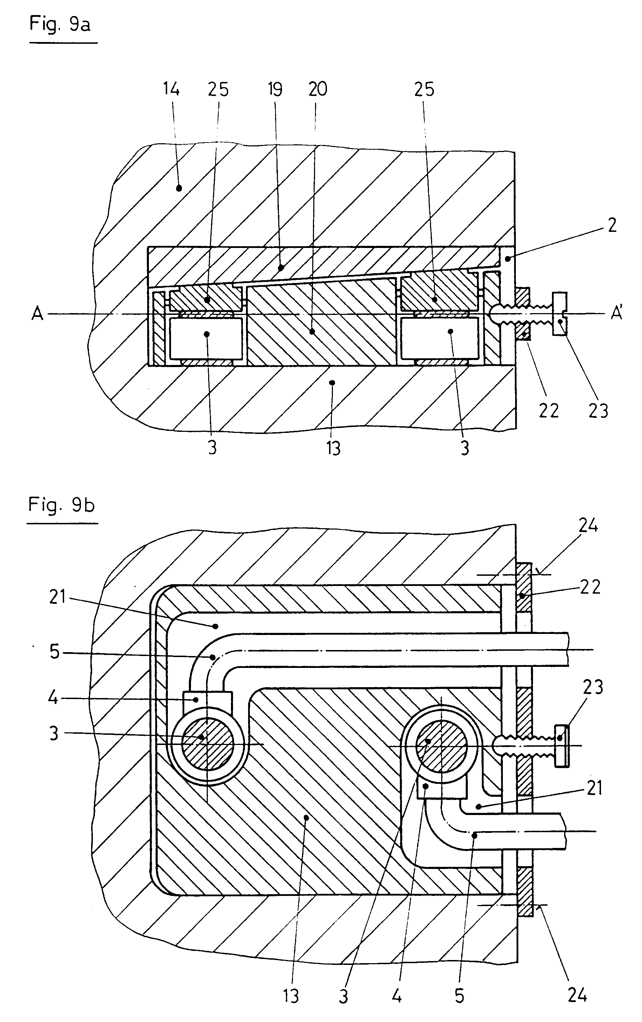

Die Figur 8a zeigt eine Einfräsung 2 in ein einziges Maschinenteil 13, in welche ein keilförmiger Mehrkomponenten-Kraftaufnehmer 20 und ein Anpresskeil 19 eingeschoben sind. Durch Drehen der Schraube 23, die in einem Gewinde im Anpresskeil 19 läuft und an der Rückwand der Einfräsung 2 anatösst, kann der Anpresskeil 19 seitlich in der Einfräsung 2 verschoben werden. Dadurch lässt sich erreichen, dass in einer bestimmten seitlichen Position des Anpresskeiles 19 die Einfräsung 2 kraftschlüssig überbrückt und der keilförmige Kraftaufnehmer 20 vorgespannt wird. Die Figur 8b zeigt einen Schnitt A-A' durch die in Fig. 8a dargestellte Ausführungsform. Dargestellt ist eine Signalableitung durch einen rechtwinkligen Anschlussstecker 4 und ein Anschlusskabel 5. Hervorzuheben ist der Unterschied zu den in den Figuren 2, 3a und 3b gezeigten Ausführungsformen. Dort befanden sich die Kraftaufnehmer in Aussparungen zwischen zwei Maschinenteilen, hier in einer Ausfräsung in einem einzigen Maschinenteil. Dies ist auch bei den Figuren 9a und 9b der Fall.

Fig. 9a zeigt einen in eine Einfräsung innerhalb eines Maschinenteils 13 eingelegten Messkeil 20, der mit zwei Kraftaufnehmern 3 mit passenden, ebenfalls konischen Abstimmelementen 25 versehen ist. Durch einen Anpresskeil 19 wird der Messkeil 20 mit dem Maschinenteil 13 kraftschlüssig verbunden. Der Kraftschluss wird hergestellt durch das Anziehen einer Anpressschraube 23, die in einer Gewindebohrung einer Zwischenplatte 22 läuft, welche mit Befestigungsschrauben 24 (Fig. 8b) am Maschinenteil 13 fixiert ist.

Fig. 9 zeigt, zwecks Verdeutlichung, einen Schnitt A-A' durch die in Fig. 8a gezeigte Ausführungsform. Die Anschlusskabel 5 verlaufen von den Kraftaufnehmern 3 mit den Steckern 4 ausgehend, vorerst parallel zur Schmalseite, dann, nach einer Abwinkelung, parallel zur Längsseite des Messkeils 20 nach aussen und liegen in speziell dafür vorgesehenen Ausfräsungen 21. Anstatt zwei kann der Messkeil 20 natürlich auch nur einen einzigen Kraftaufnehmer 3 enthalten.

Die obenstehend beschriebene und in den Figuren 1 bis 9b dargestellte Ausführungsform der erfindungsgemässen Mehrkomponenten-Messanordnung ist in ihren Anwendungen nicht auf den Drehvorgang beschränkt. Sie kann auch bei anderen metall- und kunststoffverarbeitenden Operationen wie Fräsen, Bohren, Pressen, Stanzen, Spritzgiessen, usw. zur Ueberwachung beispielsweise des Werkzeugzustandes eingesetzt werden. Die gemessenen Kraftkomponenten können den Anforderungen der zu überwachenden Operation entsprechend in einem an die Messverstärker anschliessenden Rechenwerk derart transformiert werden, dass die für die betreffende Operation relevanten Kräfte und Drehmomente gebildet werden.

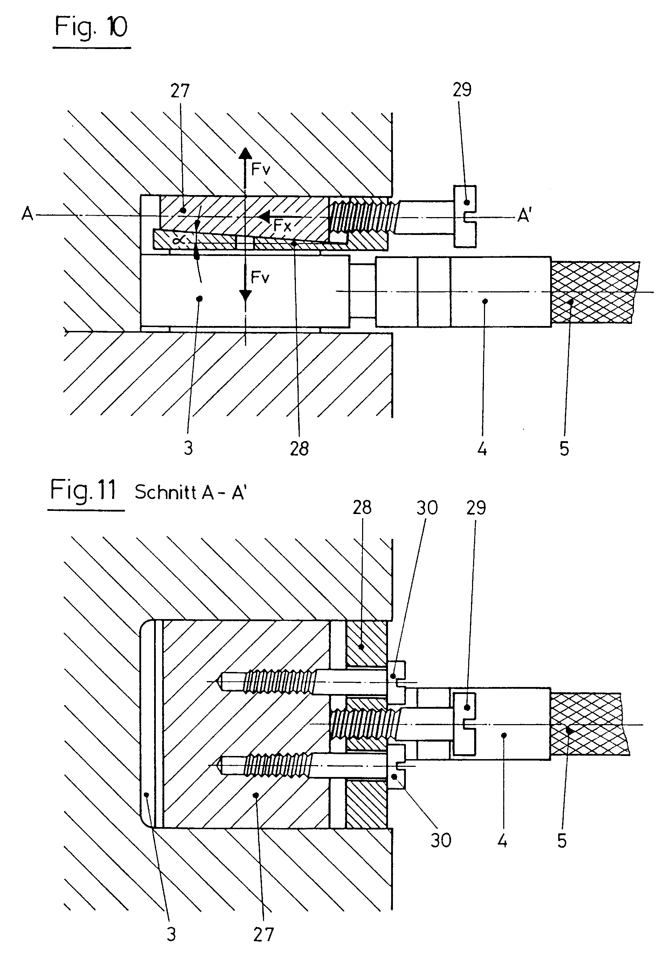

Eine weitere Ausführungsform der Erfindung ist in den Figuren 10 und 11 dargestellt, nämlich die Anwendung eines Doppelkeil-Spannelementes. Fig. 10 zeigt, dass das Doppelkeil-Spannelement 27, 28 aus einem beweglichen 27 und einem festen Keil 28 besteht, welche unter einem Keilwinkel α seitlich gegeneinander verschoben werden können. Das Doppelkeil-Spannelement 27, 28 ist kraftschlüssig mit einem Mehrkomponenten-Kraftaufnehmer 3 in einer Ausfräsung 2 in einem Maschinenteil oder zwischen zwei Maschinenteilen untergebracht (gemäss Patentanspruch 1 oder 2). 4 bedeutet den Kabelanschlussstecker, 5 das Anschlusskabel. In einem Gewinde des aufrecht stehenden Teils des festen Keils 28 läuft eine Spannschraube 29, durch deren Drehung der bewegliche Keil 27 längs der Keilfläche mit einer Kraft Fₓ bewegt werden kann, die im festen Keil 28 eine nicht eingezeichnete Gegenkraft-Fₓ erzeugt sowie nach aussen wirkende Vorspannkräfte Fᵥ, welche den Mehrkomponenten-Kraftaufnehmer 3 vorspannen. Von entscheidender Bedeutung bei dieser Ausführungsform der Erfindung ist, dass nach aussen zur Erzeugung der Vorspannung Fᵥ keine Schubkraft auftritt (die erwähnten inneren Schubkräfte Fₓ und -Fₓ in den Keilen 27 und 28 heben sich auf). Bei den vorhergehenden Ausführungsformen treten durchaus Schubkräfte auf, die bei der Messung von Schubkräften in einem oder zwischen zwei Maschinenteilen in Rechnung zu stellen sind. Bei geeigneter Wahl des Keilwinkels α kann nach der Erzeugung der notwendigen Vorspannung Fᵥ die Spannschraube 29 entfernt werden, weil infolge der Reibung zwischen den Keilen 27 und 28 Selbsthemmung auftritt und dadurch keine seitliche Verschiebung möglich ist (Patentanspruch 13). Die Selbsthemmung kann beispielsweise mittels einer in Fig. 11 (Schnitt A-A' von Fig. 10) dargestellten Konstruktion durch die Lockerungsschrauben 30 wieder aufgehoben werden. Diese durchstossen gewindefrei den aufrechtstehenden Teil des festen Keiles 28 und laufen in Gewinden des beweglichen Keiles 27. Durch Drehen der Schrauben 30 kann die Selbsthemmung gelöst und die Vorspannung aufgehoben werden (Patentanspruch 14).

## Patentansprüche

1. Mehrkomponenten-Kraftmessanordnung mit wenigstens einem in wenigstens zwei Richtungen empfindlichen und in einem Maschinenteil (1,13,14) unter Vorspannung gehaltenen Kraftaufnehmer (3,20), gekennzeichnet durch wenigstens eine im Maschinenteil vorgesehene Aussparung (2), in der der Kraftaufnehmer (3,20) und eine im Kraftfluss zwischen dem Kraftaufnehmer und dem Maschinenteil angeordnete Einrichtung (18;19, 20,25) zum Einstellen und Aufbringen der Vorspannkraft unabhängig vom Verspannungszustand des Maschinenteiles (1;13,14) aufgenommen sind.

2. Kraftmessanordnung nach Anspruch 1, dadurch gekennzeichnet, dass die Aussparung (2) in wenigstens einem von zwei benachbarten gegeneinander verspannbaren Maschinenteilen (13,14) vorgesehen ist.

3. Kraftmessanordnung nach Anspruch 1 oder 2, dadurch gekennzeichnet, dass der Kraftaufnehmer (2) im Kraftnebenschluss liegt.

4. Kraftmessanordnung nach Anspruch 1, 2 oder 3, dadurch gekennzeichnet, dass die Einrichtung zum Einstellen und Aufbringen der Vorspannkraft ein keilförmiges Teil (20) mit wenigstens einem Kraftaufnehmer (3) und einen Anpresskeil (19,25) zur Schaffung einer kraftschlüssigen Verbindung zwischen gegenüberliegenden Begrenzungsflächen der Aussparung (2) umfasst.

5. Kraftmessanordnung nach einem der vorhergehenden Ansprüche, dadurch gekennzeichnet, dass die Aussparung (2) an Stellen des Maschinenteiles mit der grössten mechanischen Beanspruchung vorgesehen ist.

6. Kraftmessanordnung nach Anspruch 1 für eine Drehmaschine mit einem Maschinenschlitten, dadurch gekennzeichnet, dass eine Vielzahl von taschenförmigen Aussparungen (2) mit Kraftaufnehmern (3) beidseitig des Maschinenschlittens (1) vorgesehen ist.

7. Kraftmessanordnung nach Anspruch 6, dadurch gekennzeichnet, dass die Anschlusstecker (4) der Kraftaufnehmer (3) zur Verlegung der Anschlusskabel (5) der Kraftaufnehmer parallel zum Maschinenschlitten abgewinkelt sind.

8. Kraftmessanordnung nach Anspruch 6, dadurch gekennzeichnet, dass die Anschlusstecker (4) der Karftaufnehmer (3) gerade und in den seitlichen Ausfräsungen (17) des Maschinenschlittens aufgenommen sind.

9. Kraftmessanordnung nach Anspruch 1 für eine Drehmaschine mit einem Maschinenschlitten, dadurch gekennzeichnet, dass der Maschinenschlitten (1) längs seiner Hauptachse eine längliche Ausfräsung (16) aufweist, welche seitlich mit taschenförmigen Aussparungen (2) versehen ist, in denen jeweils ein Kraftaufnemer (3) aufgenommen ist, und dass die Anschlusskabel (5) der Kraftaufnehmer in der länglichen Ausfräsung (16) verlegt sind.

10. Kraftmessanordnung nach einem der vorhergehenden Ansprüche, dadurch gekennzeichnet, dass der Anschlusstecker (4) eines Anschlusskabels (5) mit dem Kraftaufnehmer (3) fest verbunden ist, und dass das Anschlusskabel einen schraubbaren Stecker (10) zur Verbindung mit einer Steckbüchse einer Signalverarbeitungsanlage (15) aufweist, so dass die gesamte Messtrecke (3,4,5,10,15) hermetisch abdichtbar ist.

11. Kraftmessanordnung nach Anspruch 1, dadurch gekennzeichnet, dass die Einrichtung zum Einstellen und Aufbringen der Vorspannkraft ein Doppelkeil-Anordnung (27,28) umfasst.

12. Kraftmessanordnung nach Anspruch 11, gekennzeichnet durch eine Spannschraube (29) zur seitlichen Verschiebung eines beweglichen Keiles (27) der Doppelkeil-Anordnung (27,28).

13. Kraftmessanordnung nach Anspruch 11 und 12, dadurch gekennzeichnet, dass die Doppelkeil-Anordnung (27,28) so ausgebildet ist, dass nach Entfernen der Spannschraube (29) die Vorspannkraft durch Selbsthemmung aufrechterhalten ist.

14. Kraftmessanordnung nach Anspruch 13, gekennzeichnet durch eine Lockerungsschraube (13) zur Lösung der selbsthemmenden Wirkung der Doppelkeil-Anordnung.

## Claims

1. Multi-component force measuring arrangement having at least one force receiver (3,20) which is sensitive in at least two directions and is held prestressed in a machine part (1, 13, 14), characterised by at least one recess (2) provided in the machine part, which recess receives the force receiver (3, 20) and a device (18;19, 20,25) disposed in the force flow between the force receiver and the machine part for the purpose of adjusting and applying the prestressing force independently from the stressed condition of the machine part (1; 13, 14).

2. Force measuring arrangement according to claim 1, characterised in that the recess (2) is provided in at least one of two adjacent machine parts (13, 14) which can be stressed relative to each other.

3. Force measuring arrangement according to claim 1 or 2, characterised in that the force receiver (2) lies in the force shunt.

4. Force measuring arrangement according to claim 1, 2 or 3, characterised in that the device for adjusting and applying the prestressing force includes a wedge-shaped part (20) having at least one force receiver (3) and a press-down wedge (19, 25) for producing a connection in a positive manner between the opposing boundary surfaces of the recess (2).

5. Force measuring arrangement according to any one of the preceding claims, characterised in that the recess (2) is provided in lieu of the machine part with the greatest mechanical loading.

6. Force measuring arrangement according to claim 1 for a turning machine having one machine sliding carriage, characterised in that a plurality of pocket-shaped recesses (2) having force receivers (3) is provided on both sides of the machine sliding carriage (1).

7. Force measuring arrangement according to claim 6, characterised in that the connection plugs (4) of the force receivers (3) are angled parallel to the machine sliding carriage for the purpose of laying the connection cable (5) of the force receiver.

8. Force measuring arrangement according to claim 6, characterised in that the connection plugs (4) of the force receivers (3) are received in a straight line and in the lateral recesses (17) of the machine sliding carriage.

9. Force measuring arrangement according to claim 1 for a turning machine having a machine sliding carriage, characterised in that the machine sliding carriage (1) comprises an elongated recess (16) which extends longitudinally to its main axis and which recess (16) is provided laterally with pocket-shaped recesses (2) each of which receives a force receiver (3) and that the connection cables (5) of the force receiver are laid in the elongated recess (16).

10. Force measuring arrangement according to any one of the preceding claims, characterised in that the connection plug (4) of a connection cable (5) is fixedly connected to the force receiver (3) and that the connection cable comprises a screw-plug (10) for the purpose of providing a connection to a plug socket of a signal processing installation (15) so that the entire measuring section (3, 4, 5, 10, 15) can be hermetically sealed.

11. Force measuring arrangement according to claim 1, characterised in that the device for adjusting and applying the prestressing force includes a double-wedge arrangement (27, 28).

12. Force measuring arrangement according to claim 11, characterised by a tightening screw (29) for the purpose of laterally displacing a moveable wedge (27) of the double-wedge arrangement (27, 28).

13. Force measuring arrangement according to claim 11 and 12, characterised in that the double-wedge arrangement (27,28) is formed in such a way that after removing the tightening screw (29) the prestressing force is maintained by virtue of the self-locking process.

14. Force measuring arrangement according to claim 13, characterised by a loosening screw (13) for the purpose of loosening the self-locking effect of the double-wedge arrangement.

## Revendications

1. Dispositif de mesure de force à plusieurs composants avec au moins un capteur de force (3, 20) sensible dans au moins deux directions et maintenu sous précontrainte dans une pièce de machine (1, 13, 14), caractérisé par au moins une ouverture (2) prévue dans une pièce de machine, dans laquelle sont disposés le capteur de force (3, 20) et un dispositif (18;19, 20,25) moné dans la ligne des forces entre le capteur de force et la pièce de machine pour régler et appliquer la force de précontrainte indépendamment de l'état de précontrainte de la pièce de machine (1, 13, 14).

2. Dispositif de mesure de force selon la revendication 1, caractérisé en ce que l'ouverture (2) est prévue dans au moins une des deux pièces de machines (13, 14) voisines et pouvant être serrées l'une contre l'autre.

3. Dispositif de mesure de force selon la revendication 1 ou 2, caractérisé en ce que le capteur de force (2) se trouve dans la ligne des forces dérivée.

4. Dispositif de mesure de force selon la revendication 1, 2 ou 3, caractérisé en ce que le dispositif pour régler et appliquer la force de précontrainte comprend une pièce cunéiforme (20) avec au moins un capteur de force (3) et un coin de compression (19, 25) pour créer un assemblage mécanique entre les surfaces limitant l'ouverture (2) situées l'une en face de l'autre.

5. Dispositif de mesure de force selon l'une des revendications précédentes, caractérisé en ce que l'ouverture (2) est prévue aux endroits de la pièce de machine avec la plus forte sollicitation mécanique.

6. Dispositif de mesure de force selon la revendication 1, pour une machine tournante avec un coulisseau de machine, caractérisé en ce qu'il est prévu un grand nombre d'ouvertures (2) en forme de poche avec des capteurs de force (3) de part et d'autre du coulisseau de machine (1).

7. Dispositif de mesure de force selon la revendication 6, caractérisé en ce que les fiches de raccordement (4) du capteur de force (3) pour le placement du câble de raccordement (5) des capteurs de force sont disposées avec pliage parallèlement au coulisseau de machine.

8. Dispositif de mesure de force selon la revendication 6, caractérisé en ce que les fiches de raccordement (4) des capteurs de force (3) sont rectilignes et sont placés dans les fraisures latérales (17) du coulisseau de machine.

9. Dispositif de mesure de force selon la revendication 1 pour une machine tournante avec un coulisseau de machine, caractérisé en ce que le coulisseau de machine (1) présente, le long de son axe principal, une fraisure allongée (16) qui est pourvue latéralement d'ouvertures (2) en forme de poches, dans lesquelles sont disposés des capteurs de force (3) et en ce que les câbles de raccordement (5) des capteurs de force sont placés dans la fraisure allongée (16).

10. Dispositif de mesure de force selon l'une des revendications précédentes, caractérisée en ce que la fiche de raccordement (4) d'un câble de raccordement (5) est assemblée de manière fixe au capteur de force (3) et que le câble de raccordement présente une fiche à visser (10) pour la connexion à une fiche femelle d'une installation de traitement de signaux (15) si bien que toute la zone de mesure (3, 4, 5, 10, 15) peut être fermée de manière hermétique.

11. Dispositif de mesure de force selon la revendication 1, caractérisée en ce que le dispositif pour régler et appliquer la force de précontrainte comprend un agencement à double coin (27, 28).

12. Dispositif de mesure de force selon la revendication 11, caractérisé par une vis de serrage (29) pour déplacer latéralement un coin mobile (27) de l'agencement à double coin (27, 28).

13. Dispositif de mesure de force selon les revendications 11 et 12, caractérisé en ce que l'agencement à double coin (27, 28) est disposé de façon qu'après enlèvement de la vis de serrage (29), la force de précontrainte soit maintenue par autoblocage.

14. Dispositif de mesure de force selon la revendication 13, caractérisé par une vis de desserrage (13) pour supprimer l'effet d'autoblocage de l'agencement à double coin.
